# EUROPÄISCHE PATENTSCHRIFT

(11) **EP 1 401 708 B1**
(45) Veröffentlichungstag und Bekanntmachung des Hinweises auf die Patenterteilung: **29.10.2008**
(21) Anmeldenummer: 02747423.8
(22) Anmeldetag: 24.06.2002
(51) Int. Cl.: B64G 1/40, F03H 1/00, H05H 1/54

(54) **PLASMABESCHLEUNIGER-ANORDNUNG**
PLASMA-ACCELERATOR CONFIGURATION
DISPOSITIF POUR ACCELERATEUR A PLASMA

(30) Priorität: 23.06.2001 DE 10130464
(43) Veröffentlichungstag der Anmeldung: 31.03.2004
(73) Patentinhaber: Thales Electron Devices GmbH, 89077 Ulm (DE)
(72) Erfinder: KORNFELD, Günter, 89275 Elchingen (DE); SCHWERTFEGER, Werner, 89143 Blaubeuren (DE); LENZ, Roland, 89075 Ulm (DE); COUSTOU, Gregory, 89071 Ulm (DE)
(74) Vertreter: Weber, Gerhard
(86) Internationale Anmeldenummer: PCT/EP2002/006950
(87) Internationale Veröffentlichungsnummer: WO 2003/000550

(56) Entgegenhaltungen:
- WO-A-01/71185
- DE-A- 19 828 704
- US-A- 6 075 321
- DATABASE WPI Section PQ, Week 199416 Derwent Publications Ltd., London, GB; Class Q55, AN 1994-133821 XP002902651 & SU 1 796 777 A (FAKEL CONS BUR), 23. Februar 1993 (1993-02-23)
- AIDAR ZHAKUPOV: "Hall thruster with a sectioned conducting channel." PROC.3RD INTERNATIONAL CONFERENCE ON SPACECRAFT PROPULSION, 10. - 13. Oktober 2000, Seiten 827-828, XP002902652 CANNES 2000

## Beschreibung

Die Erfindung betrifft eine Plasmabeschleuniger-Anordnung.

Plasmabeschleuniger-Anordnungen sind insbesondere in Form von Hall-Thrustern bekannt, welche eine um eine zentrale Längsachse verlaufende Plasmakammer besitzen. Am Boden der Plasmakammer ist eine ringförmige Anode angeordnet, von welcher aus sich die Plasmakammer im wesentlichen in Form eines Kreisringzylinders in Längsachsenrichtung zum Plasmastrahlausgang erstreckt. Auf der Seite des Plasmastrahlausgangs der Plasmakammer und typischerweise außerhalb dieser ist eine aktive Kathode, insbesondere in Form einer Plasmahohlkathode mit Gasentladung oder einer thermionischen Kathode, als Elektronenquelle angeordnet, welche Elektronen einerseits in die Plasmakammer und andererseits in Richtung des austretenden Plasmastrahls zu dessen Neutralisation emittiert. Die in die Plasmakammer geleiteten Elektronen werden durch ein elektrisches Feld in Richtung der Anode beschleunigt und durch ein magnetisches Feld auf ringförmige Driftbahnen gezwungen. Das magnetische Feld durchsetzt die Plasmakammer im wesentlichen radial und wird erzeugt durch eine von der ringförmigen Plasmakammer umgebene erste Polanordnung um die zentrale Längsachse und einer zweiten, die Plasmakammer außen umgebenden zweiten Polanordnung als magnetischem Gegenpol. Eine derartige Hall-Beschleuniger-Anordnung ist beispielsweise aus der EP 0 541 309 A1 bekannt.

Eine in der US 5 847 493 beschriebene Hall-Beschleuniger-Anordnung zeigt ein komplexeres Magnetfeld, bei welchem ein zweites Polpaar in entgegengesetzter Ausrichtung in Längsrichtung von einem ersten Polpaar beabstandet ist. Beide Polpaare besitzen jeweils einen inneren, von der Plasmakammer umgebenen ersten und einen äußeren, die Plasmakammer umgebenden zweiten Pol.

Die DE 198 28 704 A1 zeigt eine Plasmabeschleuniger-Anordnung mit einer im wesentlichen kreiszylindrischen Plasmakammer, welche die Längsachse als Mittelachse enthält. Ein extern erzeugter gebündelter Elektronenstrahl wird durch eine die Plasmakammer umgebende Magnetanordnung mit in Längsrichtung alternierend aufeinanderfolgenden Polwechseln auf der Mittelachse geführt und dient neben einer die Ionisation des Arbeitsgases einleitenden Wirkung insbesondere zur Neutralisation des in gleicher Richtung aus der Plasmakammer austretenden Plasmastrahls.

Eine Plasmabeschleuniger-Anordnung aus der DE-AS 1222589 leitet gleichfalls einen gebündelten Elektronenstrahl durch eine langgestreckte lonisationskammer und neutralisiert damit einen in gleicher Richtung aus der Plasmakammer austretenden Plasmastrahl. Ein Teil der Elektroden in der Plasmakammer kann aus Wolfram bestehen.

Bei einem in der US 4 296 327 beschriebenen Teilchenbeschleuniger wird aus einer Kathode ein hochenergetischer gepulster Elektronenstrahl emittiert und durch eine Anodenblende geleitet, deren Blendenränder mit einem Plastikmaterial versehen sind. Auf das Plastikmaterial auftretende hochenergetische Elektronen schlagen aus dem Plastikmaterial Protonen aus, welche durch Raumladungseffekte von dem durch die Blendenöffnung durchtretenden Elektronenstrahl angezogen und in Strahlrichtung beschleunigt werden.

Aus der US 3 735 591 ist ein Magneto-Plasma-dynamischer (MPD) Thruster beschrieben, bei welchem außerhalb einer Plasmakammer, deren Wand durch eine kreiszylindrische Anodenelektrode gebildet ist, in Verlängerung der Mittelachse der Plasmakammer in Richtung des Plasmastrahls von der Plasmakammer entfernt und damit im Zentrum des Plasmastrahls eine Kathode angeordnet ist. Die Kathode ist zum Start des Thrusters mit einem Gas gespeist. Im laufenden Betrieb wird die Kathode durch das lonenbombardement auf nahezu 2000 K aufgeheizt und emittiert thermische Elektroden in Richtung der Anode.

Die SU 1 796 777 A1 beschreibt eine Plasmabeschleunigeranordnung mit einer ringförmigen lonisationskammer, bei welcher eine erste Kathode als Elektronenquelle außerhalb der lonisationskammer angeordnet ist und eine bei der Strahlaustrittsöffnung angeordnete Fläche durch Beaufschlagung mit Ionen Elektronen emittiert und auf diese Weise als zusätzliche Kathode wirkt.

Die GB 1 039 824 A zeigt ein lonenbeschleunigersystem, bei welchem ein lonenstrahl in einer strahloptischen Anordnung eine Strahleinschnürung mit nachfolgender Aufweitung durchläuft und im Bereich der Aufweitung durch Aufschlag von Ionen auf eine Elektrodenfläche Elektronen freisetzt.

Der vorliegenden Erfindung liegt die Aufgabe zugrunde, eine weitere sich insbesondere durch einfachen Aufbau auszeichnende Plasmabeschleuniger-Anordnung mit verbesserter Effizienz anzugeben.

Die erfindungsgemäße Lösung ist im unabhängigen Anspruch angegeben. Die abhängigen Ansprüche enthalten vorteilhafte Ausgestaltungen und Weiterbildungen der Erfindung.

Die Erfindung sieht vor, die an sich vom Hall-Thruster bekannte Anordnung einer außerhalb der Plasmakammer angeordneten, insbesondere aktiven Elektronenquelle auf einen Aufbau einer Plasmakammer anzuwenden, bei welcher die Plasmakammer eine im wesentlichen drehsymmetrische Form aufweist und im Unterschied zum Hall-Thruster nicht ringförmig einen zentralen Bereich um die Mittel-Längsachse ausspart, sondern die Mittellängsachse enthält. Die Magnetfeldanordnung weist dabei wenigstens einen die Plasmakammer umgebenden ersten Magnetpol zwischen Beschleunigungselektrode und Anode und wenigstens einen weiteren, in Längsrichtung von dem ersten Magnetpol beabstandeten zweiten Magnetpol als Gegenpol auf. Demgegenüber liegen beim Hall-Thruster die das Magnetfeld in der Plasmakammer maßgeblich prägenden korrespondierenden Magnetpole im wesentlichen radial gegenüber.

Die externe Elektronenquelle kann in an sich gebräuchlicher Weise neben den zur Ionisation des Arbeitsgases in die Plasmakammer geleiteten Elektronen auch die zur Neutralisation des austretenden Plasmastrahls benötigten Elektronen liefern. Günstigerweise kann auf die reichhaltigen Erfahrungen mit derartigen externen Elektronenquellen in Hall-Thrustern aufgebaut werden.

Im Unterschied zu bekannten Plasmabeschleuniger-Anordnungen, mit die Längsachse enthaltendem und vergleichbare Magnetfeldanordnungen aufweisendem Aufbau der Plasmakammer, in welche ein Elektronenstrahl auf der Längsachse eingeleitet ist, wird kein Strahlsystem zur Erzeugung eines gebündelten Elektronenstrahls benötigt, was die Anordnung im Aufbau vereinfacht und in der Baulänge verkürzt. Insbesondere kann die Plasmakammer anodenseitig nach hinten abgeschlossen sein.

Die Magnetfeldanordnung ist vorteilhafterweise mehrstufig mit in Längsrichtung alternierend aufeinanderfolgenden Polwechseln aufgebaut und vorzugsweise kombiniert mit einer in Längsrichtung mehrstufigen Anordnung von Elektroden auf unterschiedlichen Potentialen mit wenigstens einer Zwischenelektrode im Längsverlauf der Plasmakammer auf einem Zwischenpotential zwischen Beschleunigungselektrode und Anode. Die Zwischenelektroden liegen vorzugsweise in Längsrichtung zwischen aufeinanderfolgenden gegensinnigen Magnetpolen.

Die Erfindung ist nachfolgend anhand bevorzugter Ausführungsbeispiele unter Bezugnahme auf die Abbildungen noch eingehend veranschaulicht. Dabei zeigt
- Fig. 1: einen Längsschnitt durch eine Plasmakammer mit einer nicht zur Erfindung gehörigen passiven Elektronenquelle,
- Fig. 2: einen Längsschnitt durch eine Plasmakammer mit externer Elektronenquelle

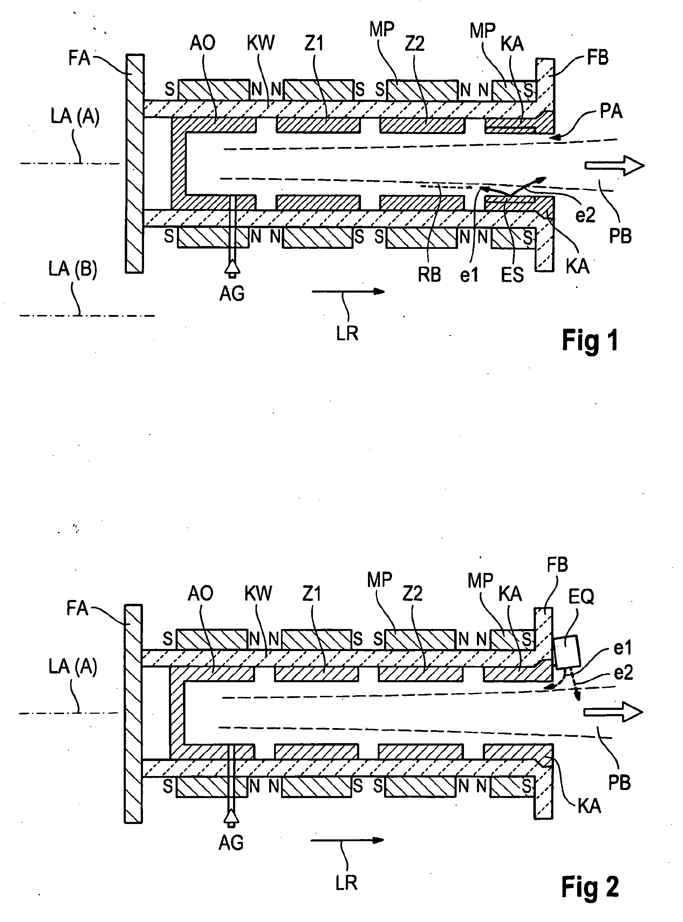

Der in Fig. 1 im Längsschnitt dargestellte Aufbau einer Plasmakammer ist stark vereinfacht gezeichnet. Die Plasmakammer PK ist seitlich begrenzt durch nichtleitende Kammerwände KW. Die Plasmakammer kann eine an sich bekannte Form besitzen, beispielsweise drehsymmetrisch um eine erste Mittel-Längsachse LA (A), welche durch die Plasmakammer verläuft, im wesentlichen kreiszylindrisch oder nach Art eines Hall-Thrusters ringförmig um eine zweite Mittel-Längsachse LA (B), welche dann nicht durch die Plasmakammer verläuft, aufgebaut sein. Im letzteren Fall ist ein zweiter Längsschnitt spiegelsymmetrisch zur Längsachse LA (B) zu ergänzen. Im folgenden wird der weiteren Erläuterung der Fig. 1 der erstgenannte Aufbau mit zentraler Längsachse LA (A) zugrunde gelegt.

Die Plasmakammer kann mit einem anodenseitigen Flansch FA und einem ausgangsseitigen Flansch FB zur Befestigung innerhalb einer größeren Anordnung versehen sein. Die Kammerwand KW kann beispielsweise aus Keramik bestehen.

In der Plasmakammer, welche sich zwischen einer Anodenelektrode AO und einer beim Ausgang PA des Plasmastrahls PB befindlichen Kathode KA als Beschleunigungselektrode für die positiv geladenen Ionen eines Arbeitsgases, beispielsweise Xenon, erstreckt, können weitere Zwischenelektroden Z1 bis Zn, im skizzierten Beispiel Z1 und Z2 in Längsrichtung LR aufeinanderfolgend vorgesehen sein. Die Zwischenelektroden Z1, Z2 liegen auf verschiedenen elektrischen Zwischenpotentialen zwischen den Potentialen von Anode AO und Kathode KA. Die Zuleitungen zu den einzelnen Elektroden sind nicht mit eingezeichnet.

Außerhalb der Plasmakammer PK und der sie umgebenden Kammerwand KW ist eine Magnetanordnung angebracht, welche die Plasmakammer PK vorzugsweise ringförmig umgibt.

Die Polung der in Längsrichtung aufeinanderfolgenden Stufen der Magnetanordnung ist von Stufe zu Stufe alternierend. Die Magnetpole der einzelnen Stufen liegen bevorzugt jeweils bei den Lücken zwischen den in Längsrichtung aufeinanderfolgenden Stufen. Durch die alternierende Polung aufeinanderfolgender Stufen der Magnetanordnung bildet sich in der Plasmakammer ein besonders günstiger Magnetfeldverlauf mit starken radialen Komponenten an den Lücken zwischen aufeinanderfolgenden Elektroden.

Der Plasmastrahl bildet sich gebündelt ohne scharfe Grenzen um die Längsachse (bzw. bei ringförmiger Plasmakammer um die Mitte der Plasmakammer) aus und zeigt typischerweise zum Ausgang PA hin in Längsrichtung eine leichte Divergenz. Das elektrische Feld in der Plasmakammer beschleunigt die Ionen des Arbeitsgases in Richtung des Plasmastrahlausgangs PA. Dabei treten auch Ionen auf, welche im Randbereich RB des Plasmastrahls so weit von der zentralen Längsachse entfernt sind, daß sie seitlich auf Elektrodenflächen, insbesondere im Bereich des Strahlausgangs PA auf die Kathode KA treffen. Durch die hohe kinetische Energie der Ionen können dabei Elektronen aus der Oberfläche der passiven Kathode ausgeschlagen werden. Diese aus der passiven Kathode freigesetzten Elektronen können zum einen durch die Differenzen der anliegenden Potentiale in Richtung der Anode beschleunigt werden und sich unter dem Einfluß der in der Plasmakammer herrschenden elektrischen und magnetischen Felder in der Plasmakammer bewegen und dabei durch Stoßionisation des Arbeitsgases, welches als neutrales Gas im Bereich der Anode eingeleitet ist, sowohl positiv geladene Ionen als auch weitere Elektronen erzeugen. Dieser aus der Kathode durch Ionenaufschlag freigesetzte Anteil von Elektronen ist in Fig. 1 mit e1 bezeichnet.

Zum anderen können die aus der Kathode freigesetzten Elektronen sich unter dem Einfluß der positiven Raumladung eines noch nicht neutralisierten Plasmastrahls als Anteil e2 zu dem Plasmastrahl hin bewegen und zu dessen Neutralisation beitragen.

Die Kathode KA kann vollständig oder zumindest an einer den aufschlagenden Ionen zugewandten Teilfläche ein Material mit niedriger eigener Sputterbarkeit aufweisen, aus welchem unter Ionenbeschuss keine materialeigenen Atome gelöst werden, und hierfür auch eine speziell präparierte Teiloberfläche oder einen Einsatz ES aufweisen.

Der Aufschlag von Ionen mit Freisetzung von Elektronen kann auch an anderer Stelle, insbesondere auch an den Zwischenelektroden Z1, Z2 auftreten, wobei der Energieverlust aus dem Plasmastrahl wegen der an dieser Stelle im Mittel geringeren kinetischen Energie des aufschlagenden Ions geringer ist. Ein Aufprall eines Ions auf die Kathode als letzter Elektrode im Längsverlauf der Plasmakammer kann aber wegen der dort höheren Energie der Ionen mehr Elektronen ausschlagen und diese zeigen auf dem längeren Weg durch die Plasmakammer auch einen wesentlich höheren Vervielfältigungsfaktor, insbesondere bei einem mehrstufigen Aufbau der Elektroden- und Magnetanordnung.

Anstelle oder zusätzlich zu der Beschleunigungselektrode KA selbst kann auch eine gesonderte Elektrode zur Freisetzung von Elektronen durch Ionenaufprall vorgesehen sein. Ferner kann, falls die Neutralisierungswirkung durch mittels Ionenaufprall erzeugte freie Elektronen unzureichend ist, eine zusätzliche geheizte Elektronenquelle als Neutralisator am Ausgang der Plasmakammer vorgesehen sein. Bevorzugt wegen des besonders einfachen Aufbaus ist aber eine Ausführung gänzlich ohne aktive Elektronenquelle und mit Erzeugung freier Elektronen zur Ionisation und zur Neutralisation aus einer passiven Elektrode allein durch Aufprall von Ionen aus dem Plasmastrahl selbst.

Der Start der Ionisation des Arbeitsgases kann bei Einleitung von Arbeitsgas in die Plasmakammer u. U. durch spontane Ladungsträgertrennung oder Einwirkung hochenergetischer Höhenstrahlung mit nachfolgender Vervielfachung getrennter Ladungsträger in der Plasmakammer erfolgen. Es kann aber auch zur Unterstützung und/oder Sicherstellung des lonisationsstarts anfänglich bei Einleiten des Arbeitsgases durch kurzfristig höheren Druck des Arbeitsgases und/oder höhere Spannung zwischen zwei Elektroden eine Gasentladung gezündet werden.

Die vorstehend erläuterte Freisetzung von Elektronen durch Beaufschlagung einer passiven Elektrodenfläche innerhalb der Plasmakammer als Elektronenquelle durch einen Teil des Plasmastrahls ist nicht Gegenstand der Erfindung.

Bei der in Fig. 2 skizzierten Ausführungsform der Erfindung ist für die Plasmakammer ein Aufbau mit einer die zentrale Längsachse einschließenden Plasmakammer vorausgesetzt, wie er an sich auch aus der einleitend erwähnten DE 198 28 704 A1 ähnlich bekannt ist. Bei der in Fig. 2 skizzierten Ausführungsform sind aber die Elektronen e1 zur Ionisation des Arbeitsgases und e2 zur Neutralisation des austretenden Plasmastrahls in einer externen Elektronenquelle EQ erzeugt, welche, wie bei gebräuchlichen Hall-Thruster-Anordnungen, im Bereich des Plasmastrahlausgangs angeordnet ist und insbesondere geheizt und/oder mit einer Gasentladung betrieben sein kann.

Während bei Hall-Thruster-Anordnungen aber die Plasmakammer ringförmig ausgebildet und eine Magnetanordnung mit einem ersten, von der Plasmakammer umringten, inneren Magnetpol und einem zweiten, die Plasmakammer umgebenden äußeren Magnetpol vorgesehen ist, ist bei der in Fig. 2 skizzierten Anordnung die Kombination der externen Elektronenquelle mit der die zentrale Mittel-Längsachse einschließenden Form der Plasmakammer und mit einer Magnet-anordnung, welche wie bereits zu Fig. 1 beschrieben, in Längsrichtung beabstandete, die Plasmakammer ringförmig umgebende, in Längsrichtung alternierende Magnetpole aufweist, wesentlich. Eine solche Merkmalskombination führt zu besonders günstigen Ringstromverhältnissen und guter Effizienz der Anordnung. Besonders vorteilhaft ist eine mehrstufige Ausführung mit mehr als zwei Polstellen der Magnetanordnung in Längsrichtung und mit elektrisch auf Zwischenpotentialen liegenden Zwischenelektroden zwischen der externen Kathode EQ und der Anode AO. Vorteilhaft ist ferner die Positionierung der Magnetpole in Längsrichtung bei den Lücken zwischen in Längsrichtung aufeinanderfolgenden Elektroden in der Plasmakammer.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Plasmabeschleuniger-Anordnung zur Abgabe eines gerichteten beschleunigten Plasmastrahls (PB) mit einer Plasmakammer zwischen einer Anode (AO) und einer am Plasmastrahlausgang angeordneten Beschleunigungselektrode, sowie einer Elektronenquelle (EQ), die zur lonisation eines Arbeitsgases (AG) in der Plasmakammer in dieser einem elektrischen und einem magnetischen Feld ausgesetzt sind, wobei die Plasmakammer drehsymmetrisch um eine Längsachse (LA) ausgebildet ist und diese enthält und eine Magnetfeldanordnung in Längsrichtung zwischen Anode und Beschleunigungselektrode wenigstens einen die Plasmakammer umgebenden ersten Magnetpol aufweist, dessen Gegenpol in Längsrichtung von dem ersten Magnetpol beabstandet ist, **dadurch gekennzeichnet, daß** die Elektronenquelle (EQ) der Plasmakammer von der Seite des Plasmastrahlausgangs Elektronen (e1) zuführt, und die Elektronenquelle (EQ) eine an der Seite des Plasmastrahlausgangns außerhalb der Plasmakammer angeordnete Elektrode umfaßt.

2. Anordnung nach Anspruch 1, **dadurch gekennzeichnet, dass** die Magnetfeldanordnung in Längsrichtung mehr als zwei alternierend aufeinanderfolgende Pole aufweist.

3. Anordnung nach Anspruch 1 oder 2, **dadurch gekennzeichnet, dass** zwischen der Anode (AO) und der Beschleunigungselektrode eine oder mehrere weitere Elektroden (Z1, Z2) vorgesehen sind, welche auf elektrischen Zwischenpotentialen zwischen den Potentialen von Beschleunigungselektrode und Anode liegen.

4. Anordnung nach einem der Ansprüche 1 bis 3, **dadurch gekennzeichnet, daß** die externe Elektronenquelle (EQ) zusätzlich einen Neutralisierungsstrom (e2) zu einem aus der Plasmakammer austretenden, nicht neutralen Plasmastrahl (PB) liefert.

5. Anordnung nach einem der Ansprüche 1 bis 4, **dadurch gekennzeichnet, daß** die Plasmakammer anodenseitig geschlossen ist und von der dem Plasmastrahlausgangs in Längsrichtung (LR) entgegengesetzten Anodenseite kein Elektronenstrahl in die Plasmakammer geführt ist.

## Claims

1. Plasma accelerator arrangement for emitting a directed accelerated plasma beam (PB), with a plasma chamber between an anode (AO) and an acceleration electrode arranged at the plasma beam output, and with an electron source (EQ) which are subjected to an electric and a magnetic field in the plasma chamber for the purposes of ionizing a working gas (AG) in the plasma chamber, wherein the plasma chamber is designed to be rotationally symmetrical about a longitudinal axis (LA) and contains the latter and a magnetic field arrangement has in the longitudinal direction between anode and acceleration electrode at least one first magnetic pole which surrounds the plasma chamber, the opposite pole of which is spaced apart in the longitudinal direction from the first magnetic pole, **characterized in that** the electron source (EQ) feeds electrons (e1) into the plasma chamber from the side of the plasma beam output and the electron source comprises an electrode which is arranged at the side of the plasma beam output outside the plasma chamber.

2. Arrangement according to Claim 1, **characterized in that** the magnetic field arrangement has in the longitudinal direction more than two alternately successive poles.

3. Arrangement according to Claims 1 or 2, **characterized in that** one or more further electrodes (Z1, Z2) are provided between the anode (AO) and the acceleration electrode, which further electrodes are at electric intermediate potentials between the potentials of acceleration electrode and anode.

4. Arrangement according to one of Claims 1 to 3, **characterized in that** the external electron source (EQ) additionally supplies a neutralizing current (e2) to a plasma beam (PB) which exits the plasma chamber and is not neutral.

5. Arrangement according to one of Claims 1 to 4, **characterized in that** the plasma chamber is closed on the anode side and no electron beam is guided into the plasma chamber from the anode side which is situated opposite the plasma beam output in the longitudinal direction (LR).

## Revendications

1. Système d'accélérateur de plasma destiné à délivrer un faisceau de plasma (PB) accéléré et orienté, lequel système présente une chambre à plasma située entre une anode (AO) et une électrode d'accélération disposée à la sortie du faisceau de plasma, ainsi qu'une source (EQ) d'électrons destinés à ioniser un gaz de travail (AG) placé dans la chambre à plasma et exposés dans cette dernière à un champ électrique et à un champ magnétique, la chambre à plasma ayant une configuration symétrique en rotation autour d'un axe longitudinal (LA) et contenant ce dernier, un système de champ magnétique présentant dans le sens de la longueur entre l'anode et l'électrode d'accélération au moins un premier pôle magnétique qui entoure la chambre à plasma et un pôle complémentaire situé à distance du premier pôle magnétique dans le sens de la longueur,
**caractérisé en ce que**
la source (EQ) d'électrons amène dans la chambre à plasma des électrons (e1) par le côté de la sortie du faisceau de plasma et la source d'électrons (EQ) comprend une électrode disposée à l'extérieur de la chambre à plasma sur le côté de la sortie du faisceau de plasma.

2. Système selon la revendication 1, **caractérisé en ce que** le système de champ magnétique présente dans le sens de sa longueur plus de deux pôles successifs alternés.

3. Système selon les revendications 1 ou 2, **caractérisé en ce qu'**entre l'anode (AO) et l'électrode d'accélération sont prévues une ou plusieurs électrodes (Z1, Z2) qui sont placées à des potentiels électriques intermédiaires entre les potentiels de l'électrode d'accélération et de l'anode.

4. Système selon l'une des revendications 1 à 3, **caractérisé en ce que** la source externe d'électrons (EQ) délivre de plus un courant de neutralisation (e2) à un faisceau de plasma (PB) non neutre qui sort de la chambre à plasma.

5. Système selon l'une des revendications 1 à 4, **caractérisé en ce que** la chambre à plasma est fermée du côté de l'anode et **en ce qu'**aucun faisceau d'électrons n'est amené dans la chambre à plasma du côté anodique opposé à la sortie du faisceau de plasma dans le sens de la longueur (LR).
